# DEMANDE DE BREVET EUROPEEN

(11) **EP 4 491 012 A1**
(43) Date de publication de la demande: **15.01.2025**
(21) Numéro de dépôt: 23306200.9
(22) Date de dépôt: 12.07.2023
(51) Int. Cl.: A01G 18/20

(54) **SUBSTITUT DE TOURBE POUR CULTURE DE CHAMPIGNONS**

(71) Demandeur: Agromar, 18170 Marcais (FR)
(72) Inventeur: MARES, Philippe, 02100 SAINT QUENTIN (FR)
(74) Mandataire: Bandpay & Greuter

(57) **Abrégé**

L'invention concerne un procédé de culture de champignons, comprenant :
- la fourniture d'un substrat de culture ensemencé avec du mycélium ;
- le dépôt, sur le substrat de culture ensemencé, d'une couche de matière de protection comprenant du vermicompost ;
- la pousse des champignons à partir du mycélium ;
- la récolte des champignons.

Le vermicompost peut être obtenu par un procédé de fabrication de vermicompost pour la culture de champignons, comprenant :
- la collecte d'un substrat de culture épuisé, à l'issue d'une culture de champignons et de la récolte des champignons ;
- l'apport de vers de terre au substrat de culture épuisé et la décomposition du substrat de culture épuisé par les vers de terre ;
- la collecte du produit obtenu à l'issue de cette décomposition.

## Description

### DOMAINE DE L'INVENTION

La présente invention concerne un substitut de tourbe pour la culture de champignons, ainsi qu'un procédé de culture de champignons utilisant ce substitut de tourbe.

### ARRIERE-PLAN TECHNIQUE

La culture des champignons, en particulier de l'espèce *Agaricus bisporus,* est généralement effectuée dans des récipients remplis d'un substrat de culture à base principalement de fumier et de paille. Ce substrat de culture doit être recouvert d'une couche d'une matière de protection qui est généralement de la tourbe. Cette matière de protection retient l'eau dans le substrat tout en autorisant les échanges gazeux avec l'atmosphère. Elle est indispensable pour obtenir une fructification correcte des champignons.

Toutefois, la tourbe est une matière organique fossile, dont l'exploitation pose des problèmes environnementaux, avec d'une part la dégradation des écosystèmes humides engendrée par l'extraction de la tourbe, et d'autre part l'émission nette de gaz à effet de serre liée à l'extraction et à la consommation d'une matière non renouvelable.

Il existe donc un besoin d'identifier un substitut de tourbe applicable à la culture des champignons, qui ne soit pas néfaste pour l'environnement et qui offre des propriétés similaires ou meilleures en termes de qualité et de rendement de la culture.

Plusieurs substituts de tourbe ont été suggérés. Par exemple, l'utilisation de produits dérivés des tiges de maïs a été proposée dans la culture de champignons. Il est fait référence à cet égard à la demande WO 2015/180781 et à la page internet https://solarimpulse.com/solutions-explorer/tefa-babs. Néanmoins, ces substituts de tourbe n'ont pas donné réellement satisfaction dans la culture des champignons.

Le document US 4337594 décrit un procédé dans lequel la couche de matière de protection est formée par un mélange de tourbe et d'un prépolymère synthétique, qui est ensuite réticulé. Ce procédé ne répond pas au besoin d'un substitut de tourbe écologique exprimé ci-dessus.

Plusieurs documents s'intéressent à l'optimisation du substrat de culture lui-même, sans proposer de substitut de tourbe. C'est le cas notamment du document FR 2614498.

Le document WO 2014/116114 décrit un procédé de compostage du compost de culture de champignons usagé par des bactéries et fungi, ainsi que de séchage de la couche de matière de protection.

L'article Recycling of spent mushroom compost using earthworms Eisenia foetida and Eisenia Andrei de Tajbakhsh et al., dans Environmentalist 28:476-482 (2008) décrit la possibilité de fabriquer du vermicompost à partir de substrat de culture de champignons usagé. Une utilisation des vermicomposts comme engrais ou substituts de milieu de rempotage est suggérée.

La thèse Effects of Vermicomposted Spent Mushroom Compost on Growing Medium Characteristics, Plant Growth, Yield and Abiotic Stress Tolérance, de Tara Duggan, University of College Cork, Ireland (2015) s'intéresse à l'utilisation de vermicompost de substrat de culture de champignons usagé pour la culture des plantes.

L'article Recycling of Spent Mushroom Substrates by Aerobic Composting to Produce Novel Horticultural Substrates de Robin Szmidt, dans Compost Science & Utilization, 2(3):63-72 (1994), décrit un produit obtenu par compostage par des microorganismes de substrat de culture de champignons et aux propriétés de ce produit en tant que substitut de tourbe. Toutefois, ce produit doit faire l'objet d'un lessivage pour abaisser sa concentration en sels. De plus, en pratique, ce type de produit n'a pas été adopté par les producteurs de champignons car il n'a pas donné satisfaction.

Il existe donc actuellement un besoin de fournir un substitut de tourbe efficace pour la culture des champignons.

### RESUME DE L'INVENTION

L'invention concerne en premier lieu un procédé de culture de champignons, comprenant :
- la fourniture d'un substrat de culture ensemencé avec du mycélium ;
- le dépôt, sur le substrat de culture ensemencé, d'une couche de matière de protection comprenant du vermicompost ;
- la pousse des champignons à partir du mycélium ;
- la récolte des champignons.

La matière de protection peut comprendre également de la tourbe et/ou un agent d'ajustement du pH, de préférence choisi parmi le carbonate de calcium et l'écume de sucrerie, et/ou des fibres végétales.

La matière de protection peut comprendre, en poids, au moins 20 % de vermicompost, de préférence au moins 50 % de vermicompost, de préférence encore au moins 75 % de vermicompost, de préférence encore au moins 90 % de vermicompost.

La matière de protection peut comprendre de 0 à 75 % en poids de tourbe, de préférence de 0 à 50 % en poids de tourbe, de préférence encore de 0 à 25 % en poids de tourbe, et de préférence encore est dépourvue de tourbe.

La couche de matière de protection peut avoir une épaisseur de 1 à 10 cm, de préférence de 3 à 5 cm.

Le vermicompost peut être fabriqué par un procédé comprenant :
- la collecte d'un substrat de culture épuisé, à l'issue d'une culture de champignons et de la récolte des champignons ;
- l'apport de vers de terre au substrat de culture épuisé et la décomposition du substrat de culture épuisé par les vers de terre ;
- la collecte du produit obtenu à l'issue de cette décomposition.

Le substrat de culture épuisé peut être mélangé avec une matière végétale avant l'apport des vers de terre, de préférence choisie parmi la paille et la sciure de bois.

La proportion massique de matière végétale, par rapport à la somme du substrat de culture épuisé et de la matière végétale, peut être de 10 à 50 %, de préférence de 15 à 30 %.

Le procédé peut comprendre le dépôt d'une couche initiale de substrat de culture épuisé mélangé avec les vers de terre, puis des dépôts successifs de couches supplémentaires de substrat de culture épuisé au-dessus de la couche initiale.

Le vermicompost peut présenter :
- une conductivité électrique inférieure ou égale à 10 mS/cm, de préférence de 0,3 à 5 mS/cm ; et/ou
- un pH de 6,5 à 8, de préférence de 7 à 7,5 ; et/ou
- une capacité de rétention d'eau maximale supérieure ou égale à 200 g / 100 g, de préférence de 225 à 450 g /100 g, en masse d'eau retenue par masse de matière sèche ; et/ou
- un rapport C/N de 8 à 20, de préférence de 10 à 16.

L'invention concerne également l'utilisation de vermicompost pour remplacer la tourbe en tout ou en partie pour le gobetage dans la culture des champignons.

Dans cette utilisation, le vermicompost peut être fabriqué par un procédé comprenant :
- la collecte d'un substrat de culture épuisé, à l'issue d'une culture de champignons et de la récolte des champignons ;
- l'apport de vers de terre au substrat de culture épuisé et la décomposition du substrat de culture épuisé par les vers de terre ;
- la collecte du produit obtenu à l'issue de cette décomposition.

Dans cette utilisation, pour la fabrication du vermicompost, le substrat de culture épuisé peut être mélangé avec une matière végétale avant l'apport des vers de terre, de préférence choisie parmi la paille et la sciure de bois ; la proportion massique de matière végétale, par rapport à la somme du substrat de culture épuisé et de la matière végétale, étant de préférence de 10 à 50 %, de préférence encore de 15 à 30 %.

Dans cette utilisation, pour la fabrication du vermicompost, une couche initiale de substrat de culture épuisé mélangé avec les vers de terre peut-être déposée, puis des couches supplémentaires de substrat de culture épuisé peuvent être successivement déposées au-dessus de la couche initiale.

Dans cette utilisation, le vermicompost peut présenter :
- une conductivité électrique inférieure ou égale à 10 mS/cm, de préférence de 0,3 à 5 mS/cm ; et/ou
- un pH de 6,5 à 8, de préférence de 7 à 7,5 ; et/ou
- une capacité de rétention d'eau maximale supérieure ou égale à 200 g / 100 g, de préférence de 225 à 450 g /100 g, en masse d'eau retenue par masse de matière sèche ; et/ou
- un rapport C/N de 8 à 20, de préférence de 10 à 16.

L'invention concerne également les champignons susceptibles d'être obtenus par le procédé de culture décrit ci-dessus.

La présente invention permet de répondre au besoin exprimé dans l'état de la technique. Elle fournit plus particulièrement un substitut de tourbe efficace pour la culture des champignons. Ce substitut peut remplacer la tourbe en tout ou en partie. Les champignons cultivés avec ce substitut de tourbe sont obtenus avec un rendement élevé et avec un faible taux de champignons déformés impropres à la commercialisation.

La culture est peu sensible aux maladies des champignons. La culture a la capacité à absorber l'eau entre la première cueille et seconde cueille.

Le substitut de tourbe de l'invention ne présente pas les inconvénients constatés avec d'autres substituts de tourbe, et notamment à base de fibres de maïs, à savoir une évolution trop rapide des champignons, la présence de champignons compétiteurs (coprins), et une réabsorption d'humidité insuffisante à la deuxième volée conduisant à des champignons fragiles en deuxième volée.

### DESCRIPTION DE MODES DE REALISATION DE L'INVENTION

L'invention est maintenant décrite plus en détail et de façon non limitative dans la description qui suit.

L'invention repose sur l'utilisation de vermicompost en tant que substitut de tourbe pour la culture de champignons. Le procédé de culture de champignons utilisant ce vermicompost est décrit ci-dessous, de même que les propriétés du vermicompost.

L'invention propose aussi la fabrication de vermicompost dans le cadre de la culture des champignons, de sorte à recycler des produits issus de la culture des champignons dans cette culture elle-même.

### A / Description générale de la culture de champignons

Dans le cadre de l'invention, les champignons cultivés sont de préférence du genre *Agaricus,* de préférence encore de l'espèce *Agaricus bisporus* ; ce sont les champignons connus sous l'appellation « champignons de Paris ». Il est également possible de cultiver des champignons du genre *Lepista,* comme *Lepista nuda* (également connu sous les appellations *Tricholoma nudum, Rhodopaxillus nudus* ou *Clitocybe nuda)* ; ce sont les champignons connus sous l'appellation « pied bleu ».

Deux produits principaux sont utilisés dans la culture des champignons : un substrat de culture, et une matière de protection.

Le substrat de culture peut être tout produit propre à fournir les nutriments nécessaires à la pousse des champignons. Il peut comprendre en particulier du fumier ou lisier ou autres déjections ; le fumier de cheval et la fiente de volaille peuvent être cités à titre d'exemple. Il peut comprendre en outre une matière végétale, notamment de la paille. Le substrat de culture peut par exemple comprendre de 35 à 65 % de fumier (ou lisier ou autres déjections) et de 35 à 65 % de matière végétale, de préférence de 40 à 60 % de fumier (ou lisier ou autres déjections) et de 40 à 60 % de matière végétale, de préférence encore de 45 à 55 % de fumier (ou lisier ou autres déjections) et de 45 à 55 % de matière végétale, en teneurs massiques relatives par rapport à la somme des deux constituants.

Le substrat de culture peut consister en le fumier (ou lisier ou autres déjections) et la matière végétale. Alternativement, le substrat de culture peut en outre comprendre un ou des adjuvants. Les adjuvants peuvent notamment comprendre du gypse, du plâtre, du son, du zinc, du manganèse, du sulfate d'ammonium, de la farine de plume.

Le substrat de culture peut être préparé en mélangeant ses constituants, éventuellement en ajoutant de l'eau (par exemple pour parvenir à une teneur totale en eau dans le substrat de 60 à 75 %, de préférence d'environ 70 % en poids) et en laissant reposer le mélange (par exemple pendant 1 à 5 semaines), de sorte à obtenir une dégradation partielle de la matière végétale par les microorganismes naturellement présents dans le mélange.

Le substrat de culture peut ensuite être composté. Il s'agit d'une phase dite de caramélisation au cours de laquelle le substrat est conservé en masse, par exemple dans un tunnel, avec une ventilation, par exemple sur le dessous ou les côtés de la masse. Au cours de cette phase, des zones du substrat peuvent atteindre une température par exemple de 80 à 85°C. Cette phase peut durer par exemple de 3 jours à 15 jours, par exemple encore environ 1 semaine.

Le substrat de culture peut ensuite être pasteurisé. Par exemple, le substrat peut être maintenu à une température supérieure ou égale à 56°C (par exemple de 58 à 62°C) pendant plus de 8 h, puis il peut être refroidi en imposant une réduction de température de 2-3°C/h pour atteindre une température de 46 à 49°C, qui est maintenue pendant une durée de plus d'un jour, par exemple environ 2 jours, de telle sorte que l'ammoniac se dissipe et que sa teneur dans le substrat devienne inférieure à 5 ppm.

Après pasteurisation, le substrat de culture peut être ensemencé avec du mycélium (lardage). Cet ensemencement peut être effectué en mélangeant le substrat de culture avec une semence. La semence peut être sous forme de graines stérilisées porteuses de mycélium. Par exemple, on peut utiliser des graines de millet. La quantité de semence, par rapport au substrat de culture, peut être par exemple de 1 à 50 L, de préférence de 5 à 15 L, de préférence environ 10 L, par tonne de substrat de culture. Il est également possible, à cette étape, d'ajouter au substrat de culture des graines concassées (par exemple de graines de soja et/ou de blé) dans une teneur indicative de 0,5 à 1 % en poids par rapport au substrat de culture.

Tout ou partie du substrat de culture peut subir un traitement antifongique, de préférence de nature biologique, pour prévenir le développement de moisissures.

Le substrat de culture ensemencé peut être disposé sur des supports rigides ou dans des récipients de culture, rigides ou non. Ces supports ou récipients peuvent être des bacs (notamment empilés), des étagères, des sacs ou autres. Le substrat de culture peut être ainsi déposé en couche sur les supports ou dans les récipients, avec une hauteur de couche pouvant être de 20 à 50 cm, de préférence de 25 à 40 cm, de préférence encore de 30 à 35 cm. Il est également possible de déposer ainsi le substrat de culture en couche avant de l'ensemencer.

Les supports ou récipients peuvent être disposés dans une chambre ou salle à atmosphère régulée pour la suite de la procédure.

L'air de la chambre peut être régulé en température, de manière adaptée pour maintenir le substrat de culture dans une plage de température souhaitée. Des sondes de température peuvent être disposées dans le substrat de culture afin de permettre ce contrôle. Généralement, l'air environnant refroidit le substrat, qui dégage de la chaleur. L'air environnant peut ainsi avoir une température de 2 à 4°C inférieure à celle du substrat.

L'air de la chambre peut également être régulé en humidité relative. Généralement, la culture génère de l'humidité, et la régulation consiste donc à réduire l'humidité relative de l'air pour compenser l'humidité générée. Par exemple, il est possible de refroidir l'air au contact d'un échangeur pour condenser de l'eau, avant de le réchauffer à nouveau. Inversement, si de l'eau doit être apportée à l'air environnant, il est possible d'apporter de la vapeur d'eau, ou de pulvériser des gouttelettes d'eau, ou encore d'arroser le substrat.

Une incubation peut être réalisée après l'ensemencement, afin de permettre au mycélium de coloniser l'ensemble du substrat de culture. Cette incubation peut être réalisée en maintenant le substrat de culture à une température par exemple de 20 à 30°C, de préférence de 23 à 27°C. L'incubation peut avoir par exemple une durée de 5 à 20 jours, de préférence de 7 à 12 jours. L'humidité relative de l'air environnant peut être maintenue à un taux supérieur ou égal à 70 %, par exemple de 85 à 95 %.

A l'issue de l'incubation, une couche de matière de protection est déposée sur le substrat de culture : c'est l'étape de gobetage.

Cette couche de matière de protection a plusieurs fonctions, à savoir : éviter que la surface du substrat de culture ne se déshydrate ; fournir une couche superficielle pauvre en nutriments, ce qui favorise la fructification ; fournir une couche superficielle dans laquelle des bactéries propices à la fructification des champignons sont susceptibles de se développer ; permettre les échanges gazeux entre le substrat de culture et l'air environnant ; et favoriser des chocs de température, qui favorisent eux-mêmes la fructification, de par le refroidissement induit par l'évaporation de l'eau à la surface de la couche de matière de protection.

Lors du dépôt de la couche de matière de protection, on peut faire en sorte que la surface supérieure du substrat de culture soit légèrement mélangée avec la matière de protection, afin d'accélérer la traversée de celle-ci par le mycélium, sans toutefois réaliser un mélange en masse du substrat de culture et de la matière de protection. Autrement dit, après le dépôt, on obtient une couche de substrat de culture surmontée d'une couche de matière de protection, les deux milieux pouvant être partiellement mélangés à leur interface.

On peut notamment griffer ou érafler le substrat de culture avant dépôt de la couche de matière de protection, et/ou griffer ou érafler la couche de matière de protection après le dépôt, par exemple de 1 jour à 10 jours après le dépôt, par exemple 1 semaine après le dépôt.

Une autre possibilité pour accélérer la traversée de la couche de matière de protection par le mycélium peut consister à ajouter du substrat de culture ensemencé et à le mélanger à la matière de protection. La quantité massique de substrat de culture ensemencé ajoutée à la matière de protection peut représenter de 2 à 15 % du total, de préférence de 3 à 10 % du total, par exemple environ 5 % du total. L'ajout et le mélange peuvent être effectués par exemple de 1 à 5 jours, ou de 2 à 4 jours, avant le dépôt de la couche de matière de protection, de sorte que la matière de protection soit en partie déjà colonisée par le mycélium lors du dépôt.

L'épaisseur de la couche de matière de protection peut être de 1 à 10 cm, de préférence de 3 à 5 cm.

Après ce dépôt, on laisse pousser les champignons, de préférence sous atmosphère contrôlée, et en réalisant si besoin un ou des arrosages. Une ventilation peut être mise en place pour assurer le refroidissement du substrat de culture.

La pousse peut comprendre une phase de post-incubation, au cours de laquelle les conditions peuvent être similaires à celles de l'incubation. Ainsi, la température du substrat de culture peut être maintenue dans une plage de 20 à 30°C, de préférence de 23 à 27°C. L'humidité relative de l'air environnant peut être maintenue à un taux supérieur ou égal à 70 %, par exemple de 85 à 95 %.

De préférence, au cours de la post-incubation, l'air de la chambre n'est pas renouvelé, de sorte que la teneur en CO₂ augmente par l'effet de la respiration du mycélium.

La teneur en CO₂ dans l'air environnant peut ainsi augmenter et atteindre des valeurs supérieures à 1000 ppm, notamment de 2000 à 10000 ppm, de préférence de 3000 à 8000 ppm, ou de 4000 à 7000 ppm. La post-incubation peut avoir par exemple une durée de 3 à 15 jours, de préférence de 4 à 10 jours.

La pousse peut également comprendre une induction de la fructification, après la post-incubation. L'induction peut comprendre une réduction de la température de l'air environnant et/ou du taux de CO₂ et/ou de l'humidité relative de l'air environnant. La réduction du taux de CO₂ peut être effectuée par apport d'air frais dans la chambre.

De préférence, ces trois facteurs sont réduits, soit simultanément, soit de manière décalée. Par exemple, il est possible de commencer par refroidir l'air environnant, avant d'apporter de l'air frais pour réduire la teneur en CO₂, par exemple de 12 h à 2 jours, notamment environ 1 jour, plus tard.

La réduction de chacun de ces facteurs peut être effectuée par exemple sur un intervalle de temps de 1 heure à 120 heures, de préférence de 24 heures à 96 heures. Après réduction de la température, la température de l'air environnant peut être par exemple de 10 à 20°C, de préférence de 15 à 18°C. La température du substrat de culture peut être de 17 à 23°C, de préférence de 18 à 22°C.

Après réduction de la teneur en CO₂ dans l'air environnant, celle-ci peut être par exemple de 500 à 3000 ppm, de préférence de 1000 à 2000 ppm.

L'humidité relative de l'air environnant peut diminuer par exemple de 1 à 20 %, par exemple de 2 à 15 %, notamment de 5 à 10 %. Elle peut ainsi s'établir dans une plage de 80 à 90 % par exemple.

Les champignons peuvent être récoltés au cours de la pousse et/ou à l'issue de la pousse.

Par exemple, une première récolte de champignons (première volée) peut être effectuée de 15 à 25 jours à partir du gobetage. La pousse peut se poursuivre pendant une durée de 3 à 10 jours, par exemple de 5 jours (de préférence sans modifier les conditions), jusqu'à une deuxième récolte (deuxième volée). Optionnellement, après celle-ci, la pousse peut se poursuivre, pendant une durée de 3 à 10 jours, par exemple de 4 jours (de préférence sans modifier les conditions), jusqu'à une troisième récolte (troisième volée). Une fois l'ensemble des récoltes effectuées, l'ensemble du substrat de culture épuisé et de la couche de matière de protection doivent être éliminés et les étapes ci-dessus doivent être recommencées pour initier une nouvelle culture.

### B / Fabrication de vermicompost à l'issue d'une culture de champignons

L'invention prévoit la fabrication de vermicompost à l'issue d'une culture de champignons telle que décrite à la section A ci-dessus. En particulier, ce vermicompost peut être fabriqué à l'issue d'une culture de champignons du genre *Agaricus,* de préférence encore de l'espèce *Agaricus bisporus* ; ou de champignons du genre *Lepista,* comme *Lepista nuda.*

Une fois que la ou les récoltes de champignons ont été effectuées, le substrat de culture épuisé est collecté. Il peut être séparé de la couche de matière de protection. Alternativement, la couche de matière de protection peut être conservée et ajoutée au substrat de culture épuisé. Dans ce cas, le substrat de culture épuisé collecté peut comprendre une teneur de 5 à 30 % en poids de matière de protection, de préférence de 10 à 25 % en poids, par exemple d'environ 20 % en poids.

Le substrat de culture épuisé collecté peut être conservé pendant une certaine durée (notamment de 3 jours à 2 mois, de préférence de 1 semaine à 4 semaines, par exemple d'environ 2 semaines) afin de lui faire perdre l'essentiel de sa capacité résiduelle à produire de la chaleur (causée par l'activité des microorganismes dans celui-ci). Cette conservation peut être réalisée à plat, c'est-à-dire sous forme d'une couche sur des supports ou dans des récipients ; la couche peut avoir une épaisseur de 5 à 50 cm, de préférence de 20 à 40 cm. La conservation également être réalisée en masse, avec un brassage intermittent, par exemple environ 2 fois par semaine. La conservation peut être réalisée à température ambiante. Lors de cette étape de conservation, on cherche à éviter un dégagement de chaleur excessif par le substrat, ainsi qu'un dégagement excessif de méthane ou de CO₂. Optionnellement, avant l'étape de conservation, voire même avant la collecte, le substrat de culture peut être pasteurisé, notamment par maintien à une température supérieure ou égale à 56°C (par exemple de 58 à 62°C) pendant plus de 8 h.

Avant ou après cette phase optionnelle de conservation, le substrat de culture épuisé collecté peut être mélangé avec une matière végétale. Cette matière végétale peut être notamment de la paille et/ou de la sciure de bois et/ou du paillis (par exemple de miscanthus), ou encore toute autre matière végétale ayant un rapport C/N d'au moins 50. Il est préféré que la matière végétale soit sous forme de copeaux ayant une épaisseur inférieure ou égale à 2 mm (dimension la plus petite des copeaux).

La proportion massique de matière végétale, par rapport à la somme du substrat de culture épuisé collecté et de la matière végétale, peut être de 10 à 50 %, de préférence de 15 à 30 %, notamment d'environ 20 %. L'ajout de la matière végétale permet d'augmenter le rapport C/N du produit, ce qui est favorable pour la décomposition ultérieure par les vers de terre.

Un ou des adjuvants peuvent également être ajoutés, par exemple un complément nutritif pour vers de terre, comprenant ou consistant en des sels minéraux, dans une proportion massique par rapport au substrat de culture épuisé collecté de 0,1 à 5 %, notamment de 0,5 à 2 %.

La composition brute obtenue après les éventuels mélanges et ajouts décrits ci-dessus est ensuite disposée sur des supports ou dans des récipients, et des vers de terre sont ajoutés.

Les vers de terre utilisés peuvent être des lombrics. Les vers de terre utilisés peuvent être notamment des vers de la classe *Clitellata,* et en particulier de la famille des *Lumbricidae* ou de la famille des *Megascolecidae* ou de la famille des *Eudrilidae.* Ils peuvent être du genre *Eisenia,* et notamment des espèces *Eisenia Foetida, Eisenia Hortensis* et/ou *Eisenia Andrei.* D'autres espèces pouvant être utilisées incluent *Eudrillus Eugeniae, Lumbricus Rubellus, Dendrobaena veneta* et *Perionyx Excavatus.*

La décomposition de la composition brute par les vers de terre peut être effectuée par couches. Ainsi, une couche initiale de composition brute peut être déposée sur des supports ou dans des récipients. Cette couche initiale peut avoir notamment une épaisseur de 10 à 50 cm, de préférence de 15 à 30 cm, par exemple d'environ 20 cm. Les vers de terre sont apportés à cette couche initiale. Le poids de vers de terre apportés peut être notamment de 200 g à 40 kg par m², de préférence de 500 g à 20 kg par m², de préférence encore de 2 à 15 kg par m².

La couche initiale est laissée à décomposer par les vers de terre pendant une durée qui peut être par exemple de 1 semaine à 1 mois. La décomposition peut avoir lieu par exemple à une température extérieure de 10 à 40°C, de préférence de 15 à 35 °C, de préférence encore de 20 à 25°C.

Puis, une couche supplémentaire de composition brute est déposée sur la couche initiale. Cette couche supplémentaire peut avoir notamment une épaisseur de 3 à 20 cm, de préférence de 5 à 15 cm, par exemple d'environ 5 à 10 cm. Les vers de terre ont alors tendance à migrer vers la couche supplémentaire. Cette couche supplémentaire est laissée à décomposer par les vers de terre pendant une durée qui peut être similaire à celle utilisée pour la décomposition de la couche initiale.

Puis le procédé est répété autant de fois que nécessaire, par dépôt d'autres couches supplémentaires, de manière similaire.

Le produit obtenu à l'issue de la décomposition par les vers de terre est qualifié de vermicompost. Il peut être collecté en retirant de temps en temps une couche inférieure de matière à partir de l'empilement de couches décrit ci-dessus. Cela peut être mis en oeuvre dans un récipient doté d'une trappe ou d'un tiroir en partie inférieure, permettant d'accéder directement à cette partie inférieure du récipient et donc à la matière ayant séjourné le plus longtemps dans le récipient.

Alternativement, il est possible de disposer le lit de vermicompost sur un convoyeur, qui pousse ce lit vers un grattoir permettant de retirer une portion inférieure du lit de vermicompost par abrasion sur le grattoir et chute de la matière dans un collecteur.

Alternativement, après avoir déposé plusieurs couches successives en empilement, il est possible de retirer une couche supérieure de cet empilement, qui contient les vers de terre, afin de récupérer le reste de la matière en dessous de celle-ci. La couche retirée peut ensuite être réintroduite sur le même support ou dans le même récipient, ou sur un autre support ou dans un autre récipient, afin de recommencer le compostage par dépôt d'une ou plusieurs couches supplémentaires successives de composition brute pardessus celle-ci.

Il peut être nécessaire de trier le vermicompost ainsi collecté pour en séparer les quelques individus vers de terre qui pourraient s'y trouver.

### C / Utilisation du vermicompost

Dans la culture de champignons qui a été décrite de manière générale en section A ci-dessus, il est possible d'utiliser du vermicompost en tant que substitut de tourbe, afin de préparer la matière de protection. La matière de protection peut comprendre, voire consister en du vermicompost.

Par *« vermicompost »* on entend ici un produit d'un procédé de décomposition d'un substrat par des vers de terre et par la flore microbienne et mycellaire associée (procédé de vermicompostage). Cette décomposition comprend une digestion par les vers de terre d'au moins une partie du substrat, et la production de déjections par ces vers de terre. Le vermicompost contient notamment des acides humiques.

Le vermicompost dont il est question ici peut être obtenu selon le procédé de la section B ci-dessus. Dans ce cas, la matière de protection utilisée au cours de la culture de champignons préalable au vermicompostage peut elle-même comprendre, voire consister en du vermicompost. Alternativement, il peut s'agir d'une autre matière de protection, notamment à base de tourbe.

Alternativement, le vermicompost dont il est question ici peut être un autre vermicompost, non issu de la culture des champignons, et obtenu par décomposition d'un autre substrat par des vers de terres, ce substrat pouvant comprendre toute matière végétale, animale et/ou fongique de manière connue en soi. Le substrat peut notamment comprendre ou consister en des déchets végétaux et/ou des déchets alimentaires et/ou du fumier (de bovin, d'équin, d'ovin, etc.). Un tel vermicompost peut être préparé selon la technique décrite en section B ci-dessus, en changeant simplement la nature du substrat de départ.

Dans un cas comme dans l'autre, le vermicompost peut être utilisé en substitution partielle ou totale de la tourbe pour le gobetage. C'est-à-dire que la matière de protection peut comprendre de la tourbe et du vermicompost, ou bien elle peut être dépourvue de tourbe.

De préférence, le vermicompost (et notamment le vermicompost obtenu selon le procédé de la section B ci-dessus) n'a pas subi de lessivage (ou lavage, ou rinçage) à l'eau (visant à réduire la teneur en sels minéraux).

Dans des modes réalisation, la matière de protection comprend, en poids, au moins 20 % de vermicompost, ou au moins 30 % de vermicompost, ou au moins 40 % de vermicompost, ou au moins 50 % de vermicompost, ou au moins 60 % de vermicompost, ou au moins 70 % de vermicompost, ou au moins 75 % de vermicompost, ou au moins 80 % de vermicompost, ou au moins 90 % de vermicompost. La teneur massique en vermicompost dans la matière de protection peut être notamment de 30 à 100 %, par exemple de 50 à 98 %, ou de 75 à 95 %.

Lorsque de la tourbe est utilisée en mélange avec le vermicompost dans la matière de protection, cette tourbe peut être de la tourbe blonde, de la tourbe brune ou de la tourbe noire. Avantageusement, la matière de protection comprend, en poids, moins de 75 % de tourbe, ou moins de 50 % de tourbe, ou moins de 40 % de tourbe, ou moins de 30 % de tourbe, ou moins de 25 % de tourbe, ou moins de 20 % de tourbe. La teneur massique en tourbe dans la matière de protection peut être notamment de 0 à 75 %, par exemple de 5 à 50 %, ou de 10 à 30 %.

La matière de protection peut optionnellement comprendre un ou des adjuvants, et notamment un agent d'ajustement du pH. Il peut s'agir en particulier d'un agent alcalin comme le carbonate de calcium et/ou l'écume de sucrerie. Un tel agent alcalin peut être utile pour contrebalancer l'acidification du milieu au cours de la fructification. Il peut s'agir alternativement d'un agent acide comme le soufre. La proportion massique d'agent d'ajustement du pH (par exemple carbonate de calcium et/ou écume de sucrerie) dans la matière de protection peut être de 1 à 20 %, de préférence de 5 à 18 % (par rapport au poids total de la matière de protection). Par exemple, la proportion massique peut être de 5 à 15 %, notamment de 8 à 12 %, pour le carbonate de calcium ; et de 10 à 20 %, notamment de 12 à 18 %, pour l'écume de sucrerie. La quantité d'agent d'ajustement du pH peut être choisie de sorte à ce que le pH de la matière de protection soit de 7 à 8, de préférence d'environ 7,5.

Un autre adjuvant possible est constitué de fibres végétales, par exemple des fibres de coco. Les fibres végétales, lorsqu'elles sont présentes, peuvent être introduites dans une teneur massique relative de 5 à 20 %, de préférence de 10 à 15 %, par rapport au total de la matière de protection.

La matière de protection peut avoir un taux d'humidité supérieur ou égal à 50 %, par exemple de 50 à 90 %, de préférence de 60 à 85 %, de préférence encore de 70 à 80 % (teneur en poids d'eau par rapport au poids total de la matière).

L'eau présente dans la matière de protection est apportée par les différents constituants décrits ci-dessus. Si nécessaire, ce taux d'humidité peut être ajusté par ajout d'eau, avant le dépôt de la couche, au moment de ce dépôt, ou après celui-ci. Le taux d'humidité peut être mesuré selon la norme NF EN 13040 (décembre 2007).

Les champignons obtenus dans le procédé de culture décrit ci-dessus, dans lequel du vermicompost a été employé pour le gobetage (en substitution de la tourbe) ont avantageusement une composition chimique spécifique. En particulier, ils peuvent présenter une teneur en calcium élevée, notamment supérieure ou égale à 10 mg/ 100 g, notamment de 10 à 30 mg / 100 g, de préférence de 15 à 30 mg / 100 g, et encore de préférence de 20 à 30 mg / 100g. Ils peuvent également présenter une teneur en protéines supérieure à 2 g /100g, notamment de 2 à 2,5 g/100 g, de préférence de 2,1 à 2,5 g/ 100 g, de préférence encore de 2,2 à 2,5 g/100 g.

La teneur en calcium peut être mesurée par spectroscopie d'émission optique à plasma à couplage inductif (ICP-OES), et la teneur en protéines peut être déterminée à partir de la mesure du taux d'azote par la méthode de Dumas (N x 6,25).

### D / Propriétés du vermicompost

La matière de protection utilisée pour la culture des champignons peut avoir une ou plusieurs des propriétés suivantes (de préférence toutes les propriétés suivantes), qui sont favorables à la culture des champignons :
- Une conductivité électrique inférieure ou égale à 10 mS/cm, par exemple de 0,1 à 8 mS/cm, de préférence de 0,3 à 5 mS/cm, de préférence encore de 0,5 à 4 mS/cm. Une faible conductivité électrique traduit le fait que le milieu est relativement pauvre en sels minéraux.
- Un pH de 6,5 à 8,5, de préférence de 7 à 8, notamment de 7,2 à 7,8.
- Une capacité de rétention d'eau maximale supérieure ou égale à 200 g / 100 g (masse d'eau retenue / masse de matière sèche), par exemple de 225 à 450 g / 100 g, de préférence de 250 à 400 g / 100 g.
- Un rapport C/N de 5 à 25, de préférence de 8 à 20, notamment de 10 à 16.

La conductivité électrique peut être déterminée selon la norme ISO 10390:2021.

Le pH peut être mesuré selon la norme NF EN 13037 (février 2012).

La capacité de rétention d'eau maximale peut être déterminée en saturant en eau un échantillon de produit, en l'égouttant, en pesant la masse de l'échantillon saturé en eau après égouttage, et en comparant cette masse à celle de l'échantillon séché après étuvage.

La teneur en azote pour le calcul du rapport C/N peut être déterminée selon la méthode de Dumas, conformément à la norme NF EN 13654-2 (juillet 2002). Alternativement, la teneur en azote peut être déterminée par la méthode Kjeldahl.

La teneur en carbone pour le calcul du rapport C/N peut être déterminée à partir d'une détermination de la teneur en matière organique selon la norme NF EN 13039 (décembre 2011), et en supposant que le carbone représente 50% de la matière organique. Alternativement, la teneur en carbone peut être déterminée selon la méthode décrite par Nelson & Sommers dans l'article Total carbon and organic matter de l'ouvrage Method of soif analysis, édité par Page et al., American Society of Agronomy, Madison, p.539-579.

Alternativement, le rapport C/N peut être déterminé par chromatographie en phase gazeuse.

De même, le vermicompost lui-même peut avoir une ou plusieurs des propriétés suivantes (de préférence toutes les propriétés suivantes), qui sont favorables à la culture des champignons :
- Une conductivité électrique inférieure ou égale à 10 mS/cm, par exemple de 0,1 à 8 mS/cm, de préférence de 0,3 à 5 mS/cm, de préférence encore de 0,5 à 4 mS/cm. Une faible conductivité électrique traduit le fait que le milieu est relativement pauvre en sels minéraux.
- Un pH de 6,5 à 8,5, de préférence de 7 à 8, notamment de 7,2 à 7,8.
- Une capacité de rétention d'eau maximale supérieure ou égale à 200 g / 100 g (masse d'eau retenue / masse de matière sèche), par exemple de 225 à 450 g / 100 g, de préférence de 250 à 400 g / 100 g.
- Un rapport C/N de 5 à 25, de préférence de 8 à 20, notamment de 10 à 16.

Ces propriétés peuvent notamment s'appliquer lorsque le vermicompost est obtenu selon le procédé décrit à la section B ci-dessus.

### EXEMPLES

Les exemples suivants illustrent l'invention sans la limiter.

### Exemple 1 - culture de champignon avec vermicompost

Des essais de culture de champignons ont été réalisés, dans des bacs disposés dans une salle à atmosphère contrôlée. Cinq modalités ont été étudiées simultanément, employant des couches de matière de protection différentes. Chaque modalité a été étudiée sur 18 bacs.

Dans tous les cas, le substrat de culture était un compost composé de paille et de fiente de volaille.

Les cinq modalités étaient les suivantes (proportions en poids) :
- Modalité 1 (tourbe seule) : 90 % de tourbe noire + 10 % de carbonate de calcium.
- Modalité 2 (rapport 3:1 de tourbe/vermicompost) : 22,5 % de vermicompost + 67,5 % de tourbe noire + 10 % de carbonate de calcium.
- Modalité 3 (rapport 1:1 de tourbe/vermicompost) : 45 % de vermicompost + 45 % de tourbe noire + 10 % de carbonate de calcium.
- Modalité 4 (rapport 1:3 de tourbe/vermicompost) : 67,5 % de vermicompost + 22,5 % de tourbe noire + 10 % de carbonate de calcium.
- Modalité 5 (vermicompost seul) : 90 % de vermicompost + 10 % de carbonate de calcium.

Le vermicompost a été obtenu à partir de substrat de culture épuisé, selon la procédure décrite en section B ci-dessus, par ajout de couches successives de substrat de culture épuisé de 5 cm d'épaisseur une fois par semaine, pendant une durée de 2 mois.

Le substrat de culture a été ensemencé avec du mycélium *d'Agaricus bisporus* fourni par Amycel, à un dosage de 0,8 % en poids. Un supplément nutritif pour champignon fourni par Amycel a été ajouté à un dosage de 0,8 % en poids, après prétraitement du supplément nutritif par un fongicide biologique, Amylo^{®}-X.

Après ensemencement, le substrat de culture a été incubé pendant 13 jours à une température de substrat comprise entre 23 et 26°C environ, dans les bacs, sous forme d'une couche de 30 à 35 cm.

La couche de matière de protection, d'une hauteur de 3 à 5 cm, a été ensuite déposée (gobetage) selon chacune des modalités 1 à 5, après griffage de la surface du substrat de culture. Chaque matière de protection a été préparée 4 jours avant le gobetage, par mélange des constituants dans une bétonnière avec humidification par arrosage à l'eau.

Après le gobetage, une phase de post-incubation a été effectuée, pendant une durée de 10 jours, à une température de 23 à 25°C environ. Un nouveau griffage de la surface a été réalisé 7 jours après le gobetage.

Après cette période de post-incubation, la fructification a été induite en abaissant la température, le degré d'humidité relative de l'air environnant et le taux de CO₂. La température a ainsi été ajustée entre 15 et 18°C environ, le taux de CO₂ a été réduit de 1200 ppm environ à 600 ppm environ.

Les champignons ont été cueillis en trois volées sur une période s'étendant entre 17 jours et 42 jours après le gobetage. Pendant cette période, les mêmes conditions que celles de l'induction ont été maintenues, avec toutefois une fluctuation du taux de CO₂ en raison des ouvertures répétées de la porte de la salle.

Les champignons cueillis ont été pesés et examinés.

Aucune infestation par *Trichoderma aggressivum* ou par *Verticillium fungicola* n'a été constatée.

Le rendement total en champignons sains à pieds entiers était le suivant :

**[Tableau 1]**

| | Rendement (moyenne et écart-type) |
|---|---|
| Modalité 1 (tourbe seule) | 29,34 ± 1,92 kg/m² |
| Modalité 2 (3:1 tourbe/vermicompost) | 30,49 ± 1,21 kg/m² |
| Modalité 3 (1:1 tourbe/vermicompost) | 29,16 ± 1,14 kg/m² |
| Modalité 4 (1:3 tourbe/vermicompost) | 28,47 ± 1,95 kg/m² |
| Modalité 5 (vermicompost seul) | 27,02 ± 0,96 kg/m² |

Le nombre total de champignons était le suivant :

**[Tableau 2]**

| | Rendement (moyenne et écart-type) |
|---|---|
| Modalité 1 (tourbe seule) | 2 036 ± 217 |
| Modalité 2 (3:1 tourbe/vermicompost) | 2 363 ± 206 |
| Modalité 3 (1:1 tourbe/vermicompost) | 2 393 ± 191 |
| Modalité 4 (1:3 tourbe/vermicompost) | 2 369 ± 227 |
| Modalité 5 (vermicompost seul) | 2 257 ± 114 |

Le taux de champignons déformés (en % du nombre) impropres à la commercialisation était le suivant :

**[Tableau 3]**

| | Taux de champignons déformés |
|---|---|
| Modalité 1 (tourbe seule) | 0,05% ± 0,15% |
| Modalité 2 (3:1 tourbe/vermicompost) | 0,00% ± 0,00% |
| Modalité 3 (1:1 tourbe/vermicompost) | 0,02% ± 0,10% |
| Modalité 4 (1:3 tourbe/vermicompost) | 0,07% ± 0,15% |
| Modalité 5 (vermicompost seul) | 0,03% ± 0,10% |

### Exemple 2 (comparatif) - culture de champignon avec substituts de tourbe dérivés de tiges de maïs

Des essais de culture de champignons ont été réalisés, dans des bacs disposés dans une salle à atmosphère contrôlée. Cinq modalités ont été étudiées simultanément, employant des couches de matière de protection différentes. Chaque modalité a été étudiée sur 6 bacs.

Dans tous les cas, le substrat de culture était un compost composé de paille et de fiente de volaille.

Les cinq modalités étaient les suivantes (proportions en poids) :
- Modalité 1 (référence) : 85 % de tourbe + 15 % d'écumes de sucrerie, réhumidifié avant emploi.
- Modalité 2 : 80 % de substitut TEFA dérivé des tiges de maïs issu de la société Cormo AG + 20 % du mélange tourbe / écumes de sucreries de la modalité 1, avec un taux d'humidité de 50 %, réhumidifié avant emploi.
- Modalité 3 : 100 % de substitut TEFA dérivé des tiges de maïs issu de la société Cormo AG, avec un taux d'humidité de 100 %, non-réhumidifié avant emploi.
- Modalité 4 : 100 % de substitut TEFA dérivé des tiges de maïs issu de la société Cormo AG, avec un taux d'humidité de 50 %, réhumidifié avant emploi.
- Modalité 5 : 83,4 % de substitut TEFA dérivé des tiges de maïs issu de la société Cormo AG, avec un taux d'humidité de 50 % + 16,6 % de granulés BABS dérivés des tiges de maïs issus de la société Cormo AG, le tout réhumidifié avant emploi.

Le substrat de culture a été ensemencé avec du mycélium *d'Agaricus bisporus* fourni par Amycel, à un dosage de 0,8 % en poids. Un supplément nutritif pour champignon fourni par Amycel a été ajouté à un dosage de 0,8 % en poids, après prétraitement du supplément nutritif par un fongicide biologique, Amylo^{®}-X.

Après ensemencement, le substrat de culture a été incubé pendant 16 jours à une température comprise entre 23 et 27°C environ, dans les bacs, sous forme d'une couche de 30 à 35 cm.

La couche de matière de protection, d'une hauteur de 3 à 5 cm, a été ensuite déposée selon chacune des modalités 1 à 5, après griffage de la surface du substrat de culture (gobetage). Chaque matière de protection a été préparée 3 jours avant le gobetage, par mélange des constituants dans une bétonnière avec humidification éventuelle par arrosage à l'eau.

Après le gobetage, une phase de post-incubation a été effectuée, pendant une durée de 7 jours, à une température de comprise entre 23 et 25°C environ. Plusieurs arrosages supplémentaires ont été effectués.

Après cette période de post-incubation, la fructification a été induite en abaissant la température, le degré d'humidité relative de l'air environnant, et le taux de CO₂. La température a en particulier été ajustée entre 16 et 18°C environ.

Les champignons ont été cueillis en trois volées sur une période s'étendant jusqu'à 39 jours après le gobetage. Pendant cette période, la température a été maintenue entre 16 et 18°C .

Les champignons cueillis ont été pesés et examinés.

Aucune infestation par *Trichoderma aggressivum* ou par *Verticillium fungicola* n'a été constatée.

Le rendement total en champignons sains à pieds entiers était le suivant :

**[Tableau 4]**

| | Rendement (moyenne et écart-type) |
|---|---|
| Modalité 1 (référence) | 27,76 ± 1,45 kg/m² |
| Modalité 2 (TEFA) | 23,54 ± 2,06 kg/m² |
| Modalité 3 (TEFA) | 9,96 ± 3,05 kg/m² |
| Modalité 4 (TEFA) | 12,31 ± 2,75 kg/m² |
| Modalité 5 (TEFA et BABS) | 14,29 ± 3,51 kg/m² |

Le nombre total de champignons était le suivant :

**[Tableau 5]**

| | Rendement (moyenne et écart-type) |
|---|---|
| Modalité 1 (référence) | 1 742 ± 76 |
| Modalité 2 (TEFA) | 1 575 ± 205 |
| Modalité 3 (TEFA) | 560 ± 208 |
| Modalité 4 (TEFA) | 775 ± 227 |
| Modalité 5 (TEFA et BABS) | 752 ± 183 |

Le taux de champignons déformés (en % du nombre) impropres à la commercialisation était le suivant :

**[Tableau 6]**

| | Taux de champignons déformés |
|---|---|
| Modalité 1 (référence) | 0,09% ± 0,20% |
| Modalité 2 (TEFA) | 0,00% ± 0,00% |
| Modalité 3 (TEFA) | 0,88% ± 1,25% |
| Modalité 4 (TEFA) | 0,00% ± 0,00% |
| Modalité 5 (TEFA et BABS) | 0,00% ± 0,00% |

### Exemple 3 - analyse du vermicompost

Trois échantillons différents de vermicompost produits selon le procédé de la section B ci-dessous, au cours de trois essais différents, ont été analysés en laboratoire.

Les résultats principaux figurent dans le tableau ci-dessous :

**[Tableau 7]**

| | Ech. 1 | Ech. 2 | Ech. 3 |
|---|---|---|---|
| Taux d'humidité (norme NF EN 13040) | 66 % | 70,6 % | 70,1 % |
| Taux de matière sèche (norme NF EN 13040) | 34 % | 29,4 % | 29,9 % |
| Matière organique sur sec (norme NF EN 13039) | 51,5 % | 57,2 % | 56,2 % |
| Carbone organique sur sec (calcul) | 25,7 % | 28,6 % | 28,1 % |
| Conductivité | 2,9 mS/cm | 3,8 mS/cm | 3,7 mS/cm |
| pH (sur la base de la norme NF EN 13037) | 7,89 | 7,09 | 6,89 |
| Azote total Dumas sur sec (norme NF EN 13654-2) | 2,2 % | 1,9 % | 1,8 % |
| Rapport C estimé / N Dumas (calcul) | 11,9 | 14,9 | 15,7 |

De plus la rétention d'eau par le vermicompost utilisé dans l'exemple 1 a été mesurée comme suit. Un échantillon de vermicompost a été prélevé et pesé. Il a ensuite été trempé à l'eau, égoutté et pesé à nouveau. Il a ensuite été placé dans une étuve à une température de 103°C pendant 2 jours, et pesé à nouveau. A partir de la masse initiale, de la masse après trempage et égouttage et de la masse après étuvage, les paramètres suivants ont été déterminés :
- capacité maximale de rétention (g eau / 100 g sec) ;
- humidité relative mesurée (g eau / 100 g brut) ;
- rétention d'eau mesurée absolue (g eau / 100 g sec) ;
- rétention d'eau mesurée relative (% de la capacité maximale de rétention).

La même démarche a été effectué sur les matières de protection des modalités 1 à 5. Les résultats sont résumés ci-dessous :

**[Tableau 8]**

| | Capacité max. | HR mesurée | Rétention absolue | Rétention relative |
|---|---|---|---|---|
| Vermicompost | 338,10 | 72,19 | 259,52 | 76,76% |
| Modalité 1 | 415,91 | 77,32 | 340,91 | 81,97% |
| Modalité 2 | 313,54 | 71,93 | 256,25 | 81,73% |
| Modalité 3 | 260,53 | 68,46 | 217,11 | 83,33% |
| Modalité 4 | 267,39 | 68,71 | 219,57 | 82,11 % |
| Modalité 5 | 274,47 | 66,67 | 200,00 | 72,87% |

### Exemple 4 - analyse de champignons

Des champignons cultivés selon un protocole similaire à celui de l'exemple 1 ont été soumis à une analyse chimique. Les teneurs en minéraux ont été mesurées par ICP-OES, et la teneur en protéines a été déterminée à partir de la mesure du taux d'azote par la méthode de Dumas (N x 6,25).

Trois modalités différentes ont été utilisées pour le gobetage :
- Modalité 1 (tourbe seule) : 90 % de tourbe noire + 10 % de carbonate de calcium.
- Modalité 2 (rapport 1:1 de tourbe/vermicompost) : 45 % de vermicompost + 45 % de tourbe noire + 10 % de carbonate de calcium.
- Modalité 3 (vermicompost seul) : 90 % de vermicompost + 10 % de carbonate de calcium.

Les résultats de l'analyse sont les suivants :

**[Tableau 9]**

| | Modalité 1 | Modalité 2 | Modalité 3 |
|---|---|---|---|
| Protéines (g/100 g) | 2.0 ± 0.4 | 2.3 ± 0.4 | 2.3 ± 0.4 |
| Fer (mg/100 g) | 0.5 ± 0.3 | 0.5 ± 0.3 | 0.6 ± 0.3 |
| Magnésium (mg/100 g) | 10 ± 2 | 11 ± 2 | 13 ± 2 |
| Calcium (mg/100 mg) | 9 ± 5 | 15 ± 6 | 26 ± 7 |
| Potassium (mg/100 g) | 384 ± 38 | 395 ± 40 | 421 ± 42 |
| Sodium (mg/100 g) | 5 ± 8 | 6 ± 8 | 9 ± 8 |

## Revendications

1. Procédé de culture de champignons, comprenant :
- la fourniture d'un substrat de culture ensemencé avec du mycélium ;
- le dépôt, sur le substrat de culture ensemencé, d'une couche de matière de protection comprenant du vermicompost ;
- la pousse des champignons à partir du mycélium ;
- la récolte des champignons.

2. Procédé selon la revendication 1, dans lequel la matière de protection comprend également de la tourbe et/ou un agent d'ajustement du pH, de préférence choisi parmi le carbonate de calcium et l'écume de sucrerie et/ou des fibres végétales.

3. Procédé selon la revendication 1 ou 2, dans lequel la matière de protection comprend, en poids, au moins 20 % de vermicompost, de préférence au moins 50 % de vermicompost, de préférence encore au moins 75 % de vermicompost, de préférence encore au moins 90 % de vermicompost.

4. Procédé selon l'une des revendications 1 à 3, dans lequel la matière de protection comprend de 0 à 75 % en poids de tourbe, de préférence de 0 à 50 % en poids de tourbe, de préférence encore de 0 à 25 % en poids de tourbe, et de préférence encore est dépourvue de tourbe.

5. Procédé selon l'une des revendications 1 à 4, dans lequel la couche de matière de protection a une épaisseur de 1 à 10 cm, de préférence de 3 à 5 cm.

6. Procédé selon l'une des revendications 1 à 5, dans lequel le vermicompost est fabriqué par un procédé comprenant :
- la collecte d'un substrat de culture épuisé, à l'issue d'une culture de champignons et de la récolte des champignons ;
- l'apport de vers de terre au substrat de culture épuisé et la décomposition du substrat de culture épuisé par les vers de terre ;
- la collecte du produit obtenu à l'issue de cette décomposition.

7. Procédé selon la revendication 6, dans lequel le substrat de culture épuisé est mélangé avec une matière végétale avant l'apport des vers de terre, de préférence choisie parmi la paille et la sciure de bois.

8. Procédé selon la revendication 7, dans lequel la proportion massique de matière végétale, par rapport à la somme du substrat de culture épuisé et de la matière végétale, est de 10 à 50 %, de préférence de 15 à 30 %.

9. Procédé selon l'une des revendications 6 à 8, comprenant le dépôt d'une couche initiale de substrat de culture épuisé mélangé avec les vers de terre, puis des dépôts successifs de couches supplémentaires de substrat de culture épuisé au-dessus de la couche initiale.

10. Procédé selon l'une des revendications 1 à 9, dans lequel le vermicompost présente :
- une conductivité électrique inférieure ou égale à 10 mS/cm, de préférence de 0,3 à 5 mS/cm ; et/ou
- un pH de 6,5 à 8, de préférence de 7 à 7,5 ; et/ou
- une capacité de rétention d'eau maximale supérieure ou égale à 200 g / 100 g, de préférence de 225 à 450 g / 100 g, en masse d'eau retenue par masse de matière sèche ; et/ou
- un rapport C/N de 8 à 20, de préférence de 10 à 16.

11. Utilisation de vermicompost pour remplacer la tourbe en tout ou en partie pour le gobetage dans la culture des champignons.

12. Utilisation selon la revendication 11, dans laquelle le vermicompost est fabriqué par un procédé comprenant :
- la collecte d'un substrat de culture épuisé, à l'issue d'une culture de champignons et de la récolte des champignons ;
- l'apport de vers de terre au substrat de culture épuisé et la décomposition du substrat de culture épuisé par les vers de terre ;
- la collecte du produit obtenu à l'issue de cette décomposition.

13. Utilisation selon la revendication 11 ou 12, dans laquelle, dans la fabrication du vermicompost, le substrat de culture épuisé est mélangé avec une matière végétale avant l'apport des vers de terre, de préférence choisie parmi la paille et la sciure de bois ; la proportion massique de matière végétale, par rapport à la somme du substrat de culture épuisé et de la matière végétale, étant de préférence de 10 à 50 %, de préférence encore de 15 à 30 %.

14. Utilisation selon l'une des revendications 11 à 13, dans lequel le vermicompost présente :
- une conductivité électrique inférieure ou égale à 10 mS/cm, de préférence de 0,3 à 5 mS/cm ; et/ou
- un pH de 6,5 à 8, de préférence de 7 à 7,5 ; et/ou
- une capacité de rétention d'eau maximale supérieure ou égale à 200 g / 100 g, de préférence de 225 à 450 g / 100 g, en masse d'eau retenue par masse de matière sèche ; et/ou
- un rapport C/N de 8 à 20, de préférence de 10 à 16.

15. Champignons susceptibles d'être obtenus par le procédé de culture de l'une des revendications 1 à 10.
